# EUROPEAN PATENT APPLICATION

(11) **EP 1 898 121 A1**
(43) Date of publication of application: **12.03.2008**
(21) Application number: 06120344.4
(22) Date of filing: 08.09.2006
(51) Int. Cl.: F16F 15/14

(54) **Passive dynamic vibration absorber**

(71) Applicant: UNIVERSITE LIBRE DE BRUXELLES, 1050 Brussels (BE)
(72) Inventor: Collete, Christophe, 4577 Modave (BE); Horodinca, Milhaita, 700005 Iasi (RO); Preumont, André, 1450 Chastre (BE)
(74) Representative: Van Malderen, Joëlle

(57) **Abstract**

The present invention is related to a dynamic vibration absorber for mounting onto a shaft (1), characterised in that the absorber comprises an internal hollow cylindrical body (2), an external hollow cylindrical body (3) and at least one ring of viscoelastic material (4). The internal hollow cylindrical body is arranged for mounting onto the shaft. The ring of viscoelastic material is interposed between the internal and external cylindrical body. The internal and external hollow cylindrical bodies and the ring of viscoelastic material may be each comprised of two halves, sectioned along a plane comprising the centre line of the cylindrical bodies or the ring.

## Description

### Field of the Invention

The present invention is related to a device for damping the vibrations of a system comprising a shaft. Particularly, the invention is related to a vibration absorber for reducing the vibrations associated with the torsional and/or bending modes of a system comprising a shaft.

### State of the Art

Rail corrugation is a phenomenon in which the head of a rail experiences a wavy type of wear. It is primarily associated with curves, particularly on the low (inner) rail in curves, and with tracks where vehicles accelerate and brake. The wavelength of the wear may vary and lies generally in the range between 10 and 300 mm. A corrugated rail causes vibrations on the railway vehicle passing by, additionally producing noise.

Rail corrugation is believed to be caused by a combination of two mechanisms, a wavelength fixing mechanism and a damage mechanism. In the wavelength fixing mechanism, the boundary conditions are such that for each vehicle that passes the same resonant mode is excited. The damage mechanism occurs when the rail already shows some corrugation damage and this damage tends to exacerbate the vibrations of vehicles passing by subsequently.

In "Rail corrugation: advances in measurement, understanding and treatment", published in Wear 258 (2005), pp. 1224-1234, S.L. Grassie et al. state that the first and second torsional resonances of a wheel set are very important wavelength fixing mechanisms. In the first torsional resonance, one wheel of a wheel set oscillates in anti-phase with the other wheel, while in the second torsional resonance of a wheel set, the wheels oscillate in phase and the drive gear, or brake disc oscillates in anti-phase with the wheels.

The traditional way of obviating the consequences of rail corrugation is to grind the rail head so as to obtain a smooth rail again. This however does not eliminate the root cause of the problem. As the torsional vibrations of the wheel sets of railway vehicles are important determinants in rail corrugation, a (partial) suppression of the resonant torsional vibrations would at least reduce the occurrence of the phenomenon.

Hence, patent application WO 2004/007217 discloses a vibration absorber mounted on the wheels of a wheel set. The vibration absorber comprises a mass resiliently mounted on the wheel and spring elements, which together with the mass have a harmonic frequency at the torsional resonance frequency of the wheel set. The mass may be the brake disc attached to the wheel. However, the mounting of the spring elements requires an adaptation of the wheel, which is not always obvious for existing railway vehicles.

In "Rail Corrugation Mitigation via a Dynamic Vibration Absorber Mounted on Driven Wheel sets of Metro Vehicles", published in the Proc. of the 3rd international Conference on advanced computational methods in engineering (ACOMEN), May 30 - June 2, 2005, Ghent, Belgium, Collette discloses a concept of dynamic torsional vibration absorber for reducing the energy loss due to vibrations of the second torsional mode of a wheel set. The concept consists in providing a ring which is fixed onto the wheel set axle or the brake disc through a thin layer of viscoelastic material. The viscoelastic layer works as a spring and damper at the same time.

The concept of a dynamic torsional vibration absorber as disclosed by Collette hereabove would be impractical to implement on wheel sets of existing railway vehicles, because the mounting of the ring on the axle requires the disassembly of at least one wheel from the axle. As the viscoelastic material would be applied directly onto the axle, that part of the axle may also require a particular surface finish.

### Aims of the Invention

The present invention aims to provide a dynamic vibration absorber for reducing the energy losses due to vibrations of a system comprising a shaft, which overcomes the drawbacks of the prior art. Particularly, the vibration absorber is able to damp vibrations associated with torsional modes of the system. The present invention equally aims to provide a method of damping vibrations associated with torsional modes of the system.

### Summary of the Invention

The concept of a dynamic torsional vibration absorber as disclosed by Collette hereabove aims at reducing the energy loss due to vibrations of the second torsional mode of a wheel set. In addition, it may also be useful to damp the vibrations associated with the first torsional mode of the wheel set (two wheels oscillating in anti-phase). In order to achieve the best results for the first torsional mode, the vibration absorber should be provided as close as possible to the location where the amplitude of vibration is maximal, i.e. the wheels. More generally, the present invention may be applied for reducing the vibrations in any system that comprises a shaft.

The invention is thus related to a dynamic vibration absorber, as set out in the appended claims, which may be easily mounted onto a shaft, is substantially maintenance-free, cost-effective and efficient in reducing the energy losses caused by vibrations. These vibrations may be associated with one or more torsional modes of the system comprising the shaft onto which the vibration absorber is mounted. They may also be associated with bending modes of said system. The system may be a wheel set comprising a pair of wheels and an axle connecting the pair of wheels.

According to one aspect of the invention there is provided a dynamic vibration absorber for mounting onto a shaft, characterised in that the absorber comprises an internal hollow cylindrical body, an external hollow cylindrical body and at least one ring composed of viscoelastic material. The internal hollow cylindrical body is arranged for mounting onto the shaft. The ring of viscoelastic material is interposed between the internal and external cylindrical body.

Preferably, the internal cylindrical body is comprised of at least two parts, sectioned along radial lines of said cylindrical body. More preferably, the external cylindrical body is comprised of at least two parts, sectioned along radial lines of said cylindrical body. Even more preferably, the ring of viscoelastic material comprises a radial cut.

Preferably, the external hollow cylindrical body of the vibration absorber is comprised of two halves, sectioned along a plane comprising the centre line of the cylindrical body. More preferably, the internal hollow cylindrical body of the vibration absorber is comprised of two halves, sectioned along a plane comprising the centre line of the cylindrical body. Even more preferably, the ring of viscoelastic material of the vibration absorber is comprised of two halves, sectioned along a plane comprising the centre line of the ring.

Preferably, the dynamic vibration absorber comprises fixing means for fixing the two halves of the external cylindrical body.

More preferably, the dimensions and tolerances of the two halves of the external cylindrical body, the two halves of the internal cylindrical body and the two halves of the ring of viscoelastic material are determined such that fixing of the two halves of the external cylindrical body causes a radial preload on the two halves of the ring and on the two halves of the internal cylindrical body.

In order to ease the assembly, one half of the external cylindrical body preferably comprises pins and the other half comprises holes arranged for accepting said pins.

In a preferred embodiment, the external cylindrical surface of the internal cylindrical body or the internal cylindrical surface of the external cylindrical body comprises a raised ridge.

In a more preferred embodiment, the dynamic vibration absorber comprises a plurality of rings of viscoelastic material. The rings may be composed of viscoelastic material with different characteristics. Preferably, an additional hollow cylindrical body is interposed between two rings of viscoelastic material. Preferably, the cylindrical bodies are composed of a metal alloy.

According to another aspect of the invention, there is provided a method of reducing the vibrations associated with the first torsional mode of a wheel set, the wheel set comprising a pair of wheels and an axle connecting said pair of wheels, characterised in that the method comprises the steps of providing a dynamic vibration absorber according to the invention, determining optimal dimensions for the dynamic vibration absorber for satisfactory reduction of said vibrations and mounting the dynamic vibration absorber on the axle and in close proximity to one of the wheels.

According to a last aspect of the invention, there is provided the use of the dynamic vibration absorber of the invention in the railway field in order to reduce rail corrugation.

### Brief Description of the Drawings

Figure 1 represents an expanded view of the dynamic vibration absorber of the invention.

Figure 2 represents an assembled view of the dynamic vibration absorber of the invention.

Figure 3 represents a zoom of figure 2, to visualize the clamping of the internal cylindrical body on the shaft.

Figure 4 represents the mounting location of the dynamic vibration absorber on a wheel set in order to optimise the suppression of vibrations associated with the first torsional mode of the wheel set.

### Detailed Description of the Invention

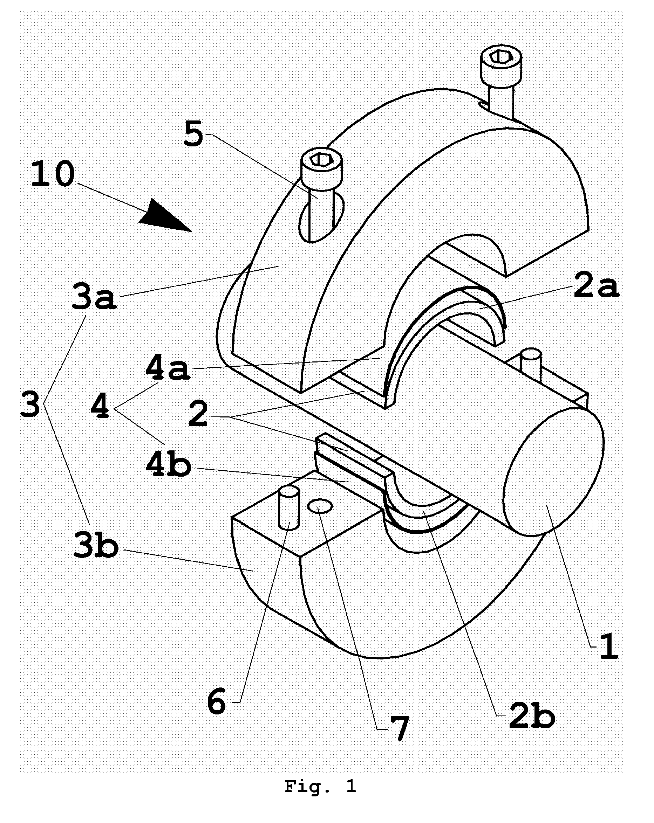

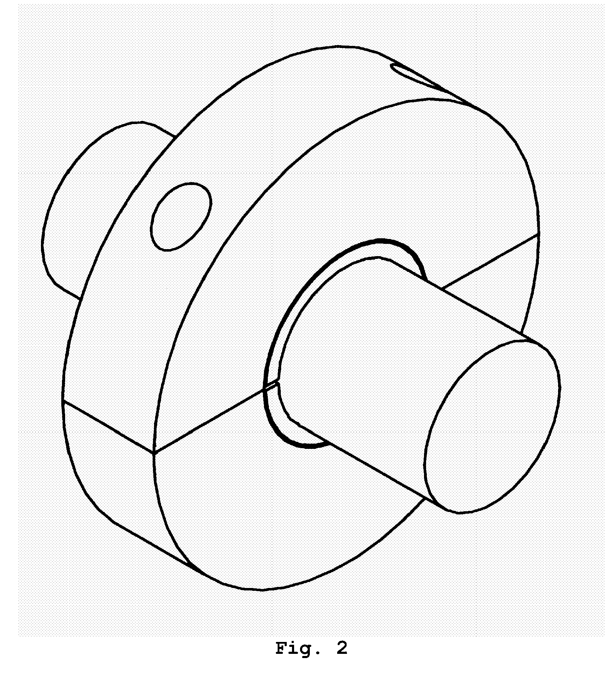

According to one embodiment of the invention, the dynamic vibration absorber (DVA) comprises an internal hollow cylindrical body, an external hollow cylindrical body and a viscoelastic material interposed between the internal and external cylindrical bodies. Figure 1 shows an expanded view of the DVA 10 according to the present embodiment. An assembled view of the DVA is shown in figure 2. Referring to figure 1, internal hollow cylindrical body 2 is arranged for mounting onto shaft 1. The internal hollow cylindrical body in this embodiment is formed of two half-cylinders 2a and 2b as depicted in figure 1. The mounting onto shaft 1 is therefore made easy. The internal diameter of the internal cylindrical body 2 must have the right tolerance for mounting onto shaft 1, such as to avoid slipping of the DVA over shaft 1. External hollow cylindrical body 3 is also formed of two half-cylinders 3a and 3b, as depicted in figure 1.

Interposed between internal and external cylindrical bodies 2 and 3 respectively, is a ring 4 of viscoelastic material. For ease of assembly, ring 4 of viscoelastic material is formed of two half-rings 4a and 4b.

Preferably, the DVA comprises fixing means 5 for fixing external half-cylinder 3a to external half-cylinder 3b. The fixing means may be bolts, in which case through-bores are provided in half-cylinder 3a. In half-cylinder 3b, internal threads may be provided in corresponding holes on the planes mating with half-cylinder 3a. Alternatively, the bolts may be secured by nuts at the side of half-cylinder 3b. In the latter case, also half-cylinder 3b is provided with through-bores for the bolts. Means for preventing loosening of the nuts may be provided between the nuts and half-cylinder 3b.

The internal and external cylindrical bodies, 2 and 3 respectively, and the ring 4 of viscoelastic material may be cut radially into non-equal parts, or into more than two equal parts (e.g. four). However, care has to be taken to keep the vibration absorber, including the fixing means, free of excentricities.

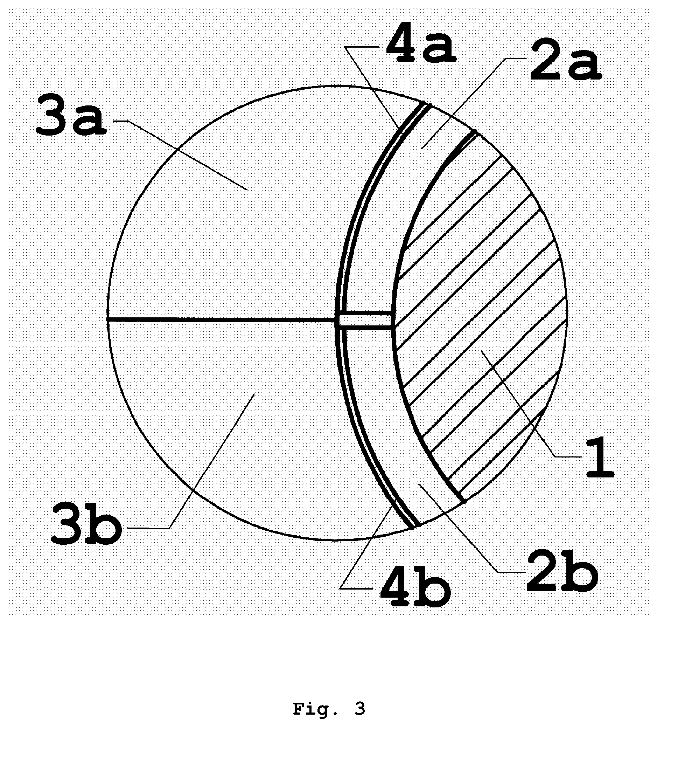

The fixing of the two external half-cylinders 3a and 3b, allows also to mount the DVA on the shaft. As shown in figure 2, and more in detail in figure 3, fastening of the two external half-cylinders 3a and 3b together, allows to clamp the internal half-cylinders 2a and 2b on the shaft 1. This is made possible by providing a gap between the "mating planes" of internal half-cylinders 2a and 2b and between the half-rings of viscoelastic material 4a and 4b when the half-cylinders 3a and 3b are fastened. Hence, fastening of the external half-cylinders 3a and 3b exerts a radial preload on the internal half-cylinders 2a and 2b so as to secure the DVA on the shaft. The fixing means 5 also provide the boundary conditions and a radial preload in the ring of viscoelastic material 4.

In order to ease the assembly of the external half-cylinders 3a and 3b, pins 6 are preferably provided onto the mating planes of half-cylinder 3b. In the mating plane of external half-cylinder 3a corresponding holes are provided that accept the pins 6.

The configuration as depicted in figure 3 avoids that the ring 4 of viscoelastic material slides out of place during use. The tolerances on the components of the DVA are chosen in such a way that when the external half-cylinders 3a and 3b are fastened by fixing means 5, and thus touch each other, the radial preload in the ring 4 of viscoelastic material and in the internal half-cylinders 2a and 2b is high enough to avoid sliding of the ring 4 out of place. There is preferably no gap between the mating planes of external half-cylinders 3a and 3b in order to fix an upper limit to the radial preload.

In an equally preferred embodiment, either the internal cylindrical body 2 or the external cylindrical body 3 comprises raised ridges to keep the ring of viscoelastic material in place. For the case of the internal cylindrical body 2, the raised ridges may be provided on the external cylindrical surface, at the two lateral ends. For the case of the external cylindrical body 3, the raised ridges may be provided on the internal cylindrical surface, at the two lateral ends. The height of the ridges must be such that the internal and external cylindrical bodies do not contact each other when assembled. Other configurations are equally possible, such as both internal and external cylindrical bodies comprising ridges, ridges not at the ends but somewhere on the cylindrical surface, etc.

In a preferred embodiment, the DVA comprises a plurality of rings of viscoelastic material. Each of these rings may be composed of a different type of viscoelastic material. Preferably, between two rings of viscoelastic material a hollow cylindrical body is interposed.

The external cylindrical body, the internal cylindrical body, and the one or more cylindrical bodies interposed between two rings of viscoelastic material may be composed of a metal alloy (iron, stainless steel, aluminium, etc.). The ring of viscoelastic material may be composed of any material having suitable viscoelastic properties for the specific application and showing a satisfactory resistance against ageing under the atmospheric conditions to which it is exposed.

The present invention equally proposes a method of reducing vibrations of a shaft or a system comprising a shaft. The method makes use of the dynamic vibration absorber of the invention. The mass of the external cylindrical body 3 and the viscoelastic properties of ring 4 are preferably tuned so as to achieve a satisfactory reduction of the amplitude of the envisaged vibrations. The tuning procedure should determine the dimensions of the components of the DVA (internal and external cylindrical bodies, ring of viscoelastic material). The tuning procedure may additionally result in the choice of an appropriate viscoelastic material for the ring 4. The fixing means 5 may not be used in the tuning procedure.

The vibrations that are to be reduced may be associated with torsional modes of the shaft 1, or the system comprising the shaft 1. The shaft 1 may form part of a wheel set comprising two wheels and an axle connecting the pair of wheels. The wheel set may furthermore comprise a brake disc mounted on the axle, and/or a drive gear.

Additionally, as the ring of viscoelastic material may be considered as a spring and damper element acting in all directions, the DVA of the present invention may be used for reducing the vibrations associated with bending modes of the shaft 1, or the system comprising the shaft 1.

The mounting location of the DVA of the invention on the shaft is also an important aspect in optimising the reduction of the vibrations. The DVA should be mounted as close as possible to the location where the vibrations have maximal amplitude. This location may be different for the different torsional and bending modes.

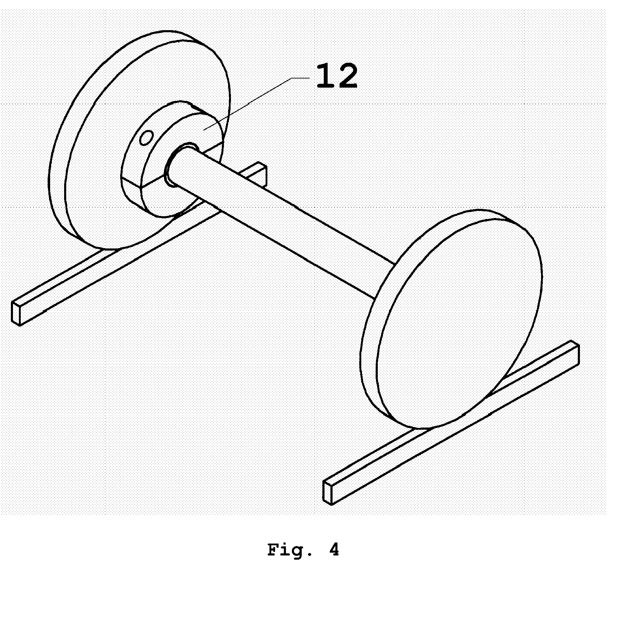

In the case of the damping of vibrations on a wheel set with axle (see figure 4), and in order to have a satisfactory reduction of the vibrations associated with the first torsional mode of the wheel set (one wheel oscillates in anti-phase with the other wheel) the present invention proposes to mount the DVA 10 on the axle and as close as possible to one of the wheels. The preferred mounting location is indicated in figure 4 by numeral 12.

The working principle of the DVA of the invention is as follows. The external cylindrical body is appendend to the main system (wheel set) through the viscoelastic ring, which acts like a spring and damper. The external cylindrical body and the viscoelastic ring behave thus like a smaller dynamic system, with its own resonance frequency. This smaller dynamic system should be dimensioned in such a way that its resonance frequency is substantially the same as the resonance frequency of the main system we want to damp. The motion of the main system is then affected by the motion of the additional dynamic system. For this reason the additional mass/spring system has been called a dynamic vibration absorber.

The bandwith of the DVA can be improved by an appropriate choice of viscoelastic material. By so doing, vibrations associated with more than one resonant frequencies may be reduced. A DVA comprising a plurality of rings of viscoelastic material may be tuned to reduce the vibrations associated with different resonant frequencies.

## Claims

1. A dynamic vibration absorber (10) for mounting onto a shaft (1), **characterised in that** the absorber comprises:
- an internal hollow cylindrical body (2) arranged for mounting onto the shaft,
- an external hollow cylindrical body (3) and
- a ring (4) composed of viscoelastic material interposed between the internal and external cylindrical body.

2. The dynamic vibration absorber according to claim 1, wherein the internal and external hollow cylindrical bodies are each comprised of two parts, sectioned along two radial lines of said cylindrical bodies.

3. The dynamic vibration absorber according to claim 2, wherein the ring of viscoelastic material comprises a radial cut.

4. The dynamic vibration absorber according to any one of the preceding claims, further **characterised in that** the internal and external hollow cylindrical bodies and the ring of viscoelastic material are each comprised of two halves, sectioned along a plane comprising the centre line of said cylinder or said ring.

5. The dynamic vibration absorber according to claim 4, further comprising fixing means (5) arranged for fixing the two halves (3a, 3b) of the external cylindrical body.

6. The dynamic vibration absorber according to claim 5, wherein the dimensions and tolerances of the two halves (3a, 3b) of the external cylindrical body, the two halves (2a, 2b) of the internal cylindrical body and the two halves (4a, 4b) of the ring of viscoelastic material are determined such that fixing of the two halves of the external cylindrical body causes a radial preload on the two halves of the ring and on the two halves of the internal cylindrical body.

7. The dynamic vibration absorber according to any one of the claims 4 to 6, wherein one half (3b) of the external cylindrical body comprises pins (6) and the other half (3a) comprises holes arranged for accepting said pins.

8. The dynamic vibration absorber according to any one of the preceding claims, wherein the external cylindrical surface of the internal cylindrical body or the internal cylindrical surface of the external cylindrical body comprises a raised ridge.

9. The dynamic vibration absorber according to any one of the preceding claims comprising a plurality of rings of viscoelastic material.

10. The dynamic vibration absorber according to claim 9, wherein an additional hollow cylindrical body is interposed between two rings of viscoelastic material.

11. The dynamic vibration absorber according to any one of the preceding claims, wherein said cylindrical bodies are composed of a metal alloy.

12. A method of reducing the vibrations associated with the first torsional mode of a wheel set, the wheel set comprising a pair of wheels and an axle connecting said pair of wheels, **characterised in that** the method comprises the steps of:
- providing a dynamic vibration absorber according to any one of the preceding claims,
- determining optimal dimensions for the dynamic vibration absorber for satisfactory reduction of said vibrations and
- mounting the dynamic vibration absorber on the axle and in close proximity to one of the wheels.

13. Use of the dynamic vibration absorber according to any one of the claims 1 to 9 in the railway field in order to reduce rail corrugation.
